# EUROPEAN PATENT SPECIFICATION

(11) **EP 1 898 171 B1**
(45) Date of publication and mention of the grant of the patent: **19.08.2009**
(21) Application number: 06405388.7
(22) Date of filing: 11.09.2006
(51) Int. Cl.: F27D 19/00, F27B 7/20, F27B 7/42, F23L 7/00, F23J 15/00, C04B 7/36, C04B 7/43, B01D 53/56

(54) **Precalciner temperature control**
Temperaturkontrolle für Vorkalzinierer
Procédé de régulation de temperature pour four à précalcineur

(43) Date of publication of application: 12.03.2008
(73) Proprietor: ABB Research Ltd, 8050 Zürich (CH)
(72) Inventor: Stadler Konrad, 5424 Unterehrendingen (CH); Alvarez Gallestey Eduardo, 5522 Tägerig (CH)
(74) Representative: ABB Patent Attorneys

(56) References cited:
- US-A1- 2005 284 347

## Description

### Background of the Invention

The present invention relates to a method for controlling the temperature in a precalciner and to a method for controlling the temperature and the level of nitrogen oxides (NO_{X}) in a precalciner.

Rotary kiln plants in the cement industry are equipped with precalcining technology in combination with multiple stage suspension pre-heaters. In the precalciner, the raw material being processed - a mix of limestone and clay - is largely calcined while heat is supplied. The precalciner's purpose is essentially to improve the quality of the hot meal before it enters the rotary kiln. Quality means that the raw material is decarbonized, i.e. CaCO₃ + heat → CaO + CO₂. This allows for smaller rotary kilns and thus save costs. The heat source is to some extent the hot gas from the rotary kiln which flows through the precalciner but to the major part fuel inputs into the precalciner. Typically between 50 and 65, in modern plants up to 70 percent of the total firing heat capacity is used in the precalciner, the rest at the 'main' burner in the rotary kiln. The use of staged combustion reduces the NOₓ, which is produced by the combustion process (the source of the N is the N₂ of the combustion air). One of the main legal issues is to ensure that strict constraints are never exceeded. For this purpose water or other NO_{X} reducing watery solutions (such as urea, ammoniac, etc) are injected in the precalciner to reduce NO_{X} emissions when necessary. The water injection used to control NO_{X} emissions is typically designed such that a running average of e.g. 30 minutes is below a certain threshold, i.e. water injection is used for a slow varying process.

The aim pursued in cement production is to achieve effective NO decomposition in the precalciner accompanied by good burn-out, trouble-free kiln operation and high flexibility with regard to the fuels utilized. In order to go easy on fossil fuels mainly used as regular fuels (e.g., oil, coal) an increasing part of the energy comes from burning alternative fuels (e.g. substitute liquid fuels produced from the recycling of waste solvents, scrap tires, packaging waste paper and plastic wastes, waste oils, sewage sludge pellets, meat and bone meal) which are highly uncertain regarding calorific value. To ensure well prepared meal entering the rotary kiln a main issue is to stabilize the temperature of the meal in the precalciner. Usually this is done by controlling the main heat input to the precalciner, i.e. the regular and the alternative fuels inputs.

Alternative fuels are commonly fed at remote deposits to conveyor systems to be transported to the calciner. Until they reach the combustion place time delays of several minutes are common. This makes alternative fuels inappropriate to control fast temperature changes within a time frame of 20-30 seconds. Moreover, large changes on alternative fuels introduce disturbances which have to be compensated by the appropriate change of other heat sources, namely the regular fuel input. The regular fuel inputs are however limited to predefined rate changes (due to the used feeding equipment), which leads to poor overall performance.

### Background Art

In WO 95/29138 a special temperature sensor is defined, which replaces the standard sensors in an automatic kiln temperature control system.

It is a well known technique and a quite common approach to inject water into the precalciner to control the amount of NO_{X} in the precalciner. US 2005/0074383 A1 discloses such a water injection application. Alternatively, NO_{X} -levels in the precalciner could be controlled as well by injecting water into the exhaust or directly into the rotary kiln, as proposed in US 2005/0284347 A1.

### Summary of the Invention

It is an object of the present invention to improve the present precalcining technology by providing a new method to control the temperature in a precalciner.

This object is achieved using an existing water injecting technology used in precalciners for NO_{X} control. The inventive method comprises the step of injecting water into the precalciner to control the temperature.

Thanks to considerably different time horizons of the NO_{X} control on one side and the temperature control on the other side, both NO_{X} and temperature can be controlled in parallel. The short term variations on the water injection for temperature control purposes are superposed to the long term water injections necessary to provide appropriate NO_{X} control.

As mentioned above, the water injection is generally only used to control NO_{X} emissions and moreover it is designed such that a running average of a longer period of time, e.g. 30 minutes, is below a certain threshold. For controlling NO_{X} levels water injection is used in a slow varying process. On the other hand, injecting water has an immediate impact on the temperature. If the average amount of water injected is unchanged, short term variation of the amount of water injected will not affect the NO_{X} control. It is therefore possible to juxtapose short term variations on the long term average water injection and to use it to support the temperature control task.

The above principles can be implemented on any industrial control platforms. In the cement manufacturing, for example, the main control inputs to the precalciner are supported to maintain given temperature targets while simultaneously ensure the long term NO_{X} constraints. This principle can be applied to any precalciner, not restricted to cement plants.

Instead of injecting water, any NO_{X} reducing watery solution, such as urea, ammoniac, etc, can be used.

### Brief Description of the Drawings

Some of the features, advantages, and benefits of the present invention having been stated, others will become apparent as the description proceeds when taken in conjunction with the accompanying drawings in which:
- Fig. 1: schematically shows a typical cement plant with a rotary kiln, a precalciner and a multi-stage suspension preheater,
- Fig. 2: schematically shows the inventive NO_{X} and temperature control system,
- Fig. 3: shows a first diagram with three curves representing the temperatures in a calciner over the course of time, and
- Fig. 4: shows a second diagram with two curves representing the amount of water injected into the calciner over the course of time.

### Description of the Preferred Embodiments

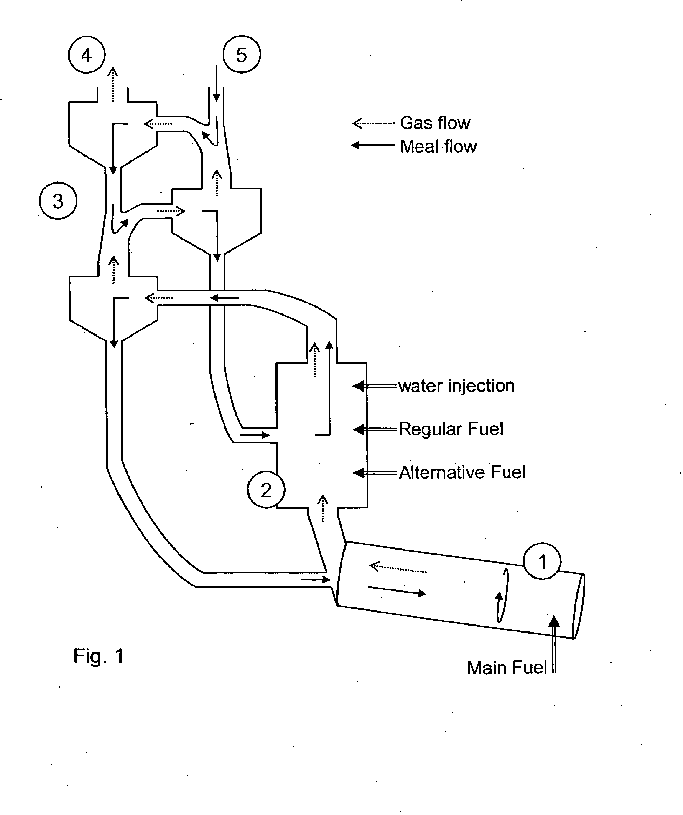

Fig. 1 schematically shows a typical cement plant with a rotary kiln 1, a precalciner 2 and a multi-stage suspension preheater 3.

Raw meal to be processed into cement clinker enters the system in a first stage 5 of the preheating system 3. Hot exhaust gases from the precalciner and the rotary kiln flow through the preheater from the lower to the top end 4 while the meal flows in the opposite direction. Before each preheater stage gas and meal are mixed and within the preheater chamber the meal and gas are separated. This allows for an efficient heat exchange, thus the meal temperature increases on its way down to the precalciner where the fuel input provides even more heat to spur on the decarbonizing of the meal. From the precalciner the hot meal gas mixture enters the lowest suspension preheater where the gas and meal are separated. The well prepared hot meal enters then the rotary kiln where the sintering of the clinker takes place.

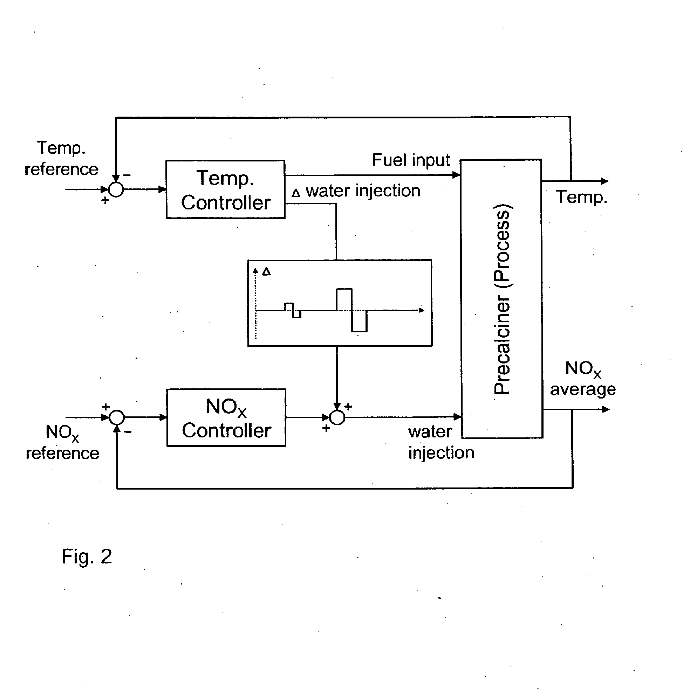

Fig. 2 schematically shows the two systems for controlling NO_{X} and temperature that are combined according to this invention.

As explained above, a certain amount of water is permanently injected for NO_{X} control purposes. This amount of water injected is periodically adjusted by an NO_{X} control circuit, typically following a running average of measured NO_{X} levels. Said running average is taken over a longer period of time, e.g. 30 minutes or more. Adjustments in the amount of water to be injected for NO_{X} purposes are affecting the temperature in the precalciner and are therefore accompanied with an adjustment of the amount of fuel fed into the precalciner. These are however, long term adjustments, in the course of several minutes.

The appropriate temperature in the precalciner is therefore stabilized by a temperature control circuit controlling the main heat input to the precalciner. Regular and/ or alternative fuels are added depending on the permanently measured temperature. Moderate changes in the measured temperature, due to a variation in the amount of injected water or due to other circumstances, can well be controlled by varying the amount of energy added to the system. In order to react to sudden temperature increases, cutting off the energy supply might, however, not have the desired immediate impact. Moreover, if the temperature in the system suddenly drops, there might not be enough energy available to immediately react and bring the temperature back up to the desired level. Unlike gas or liquids, bulk material fuels which are most commonly used are not variable in a few seconds time and therefore not suitable for fast short term temperature control.

Rather than varying the amount of fuel added to the precalciner, the short term temperature control is achieved by instantaneously varying the amount of water injected into the precalciner. This short term variation on the water injection for temperature control purposes is superposed to the long term water injection necessary to provide appropriate NO_{X} control.

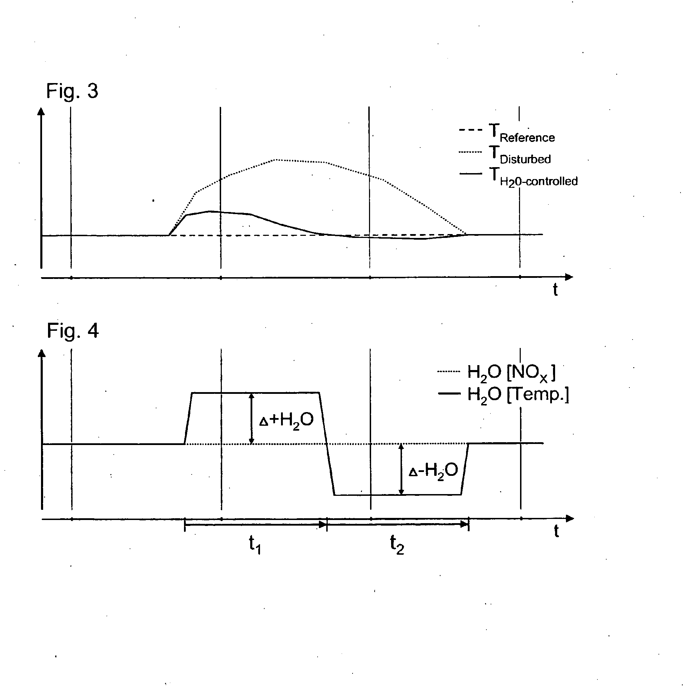

With the help of two diagrams shown in Fig. 3 and Fig. 4, the inventive method is explained for a sudden increase of temperature.

Upon detecting a sudden increase in temperature T_{Disturbed}, the temperature control circuit determines an adjustment amount of water to be injected additionally for a specific, short period of time t₁. This additional amount of water Δ+H₂O is then injected on top of to the constant amount of water injected for NO_{X} control. Once the determined time period t₁ has passed, the amount of water injected is decreased for compensation of the additionally injected water below the constant amount injected for NO_{X} control purposes and kept at that lower lever for another predetermined period of time t₂. The compensational amount of water Δ-H₂O reduced from the constant amount of water is determined by the control circuit as well as the duration of time period t₂. Once the determined time period t₂ has passed, the amount of water injected is increased up to the constant level determined by the NO_{X} control. Typically, time periods t₁ and t₂ have a lengths of a few seconds to a few minutes. Both the adjustment amount of water and the compensational amount of water can be updated and varied, if a new measurement of the temperature makes such an additional adjustment necessary.

The total amount of water injected during both time periods t₁ and t₂ is about equal to the average amount of water injected for NO_{X} control purposes injected during the same time period. The overall, long-term NO_{X} level is therefore not affected by the short-term variation of the injected amount of water. In one particular embodiment of the inventive method, the positive and negative amounts of water injected are exactly equal.

In the temperature diagram of Fig.3, the dotted line shows the temperature T_{Disturbed,} without an additional amount of water injected. The temperature would rise until the cause for the increase is either removed, has disappeared by itself or is compensated by the regular fuel input and would then go back to the level of the reference temperature T_{Reference.} If however, immediately after detecting a deviation from T_{Reference} the amount of water injected is increased, the temperature T_{H2O-controlled} can be lowered and brought back to the level of the reference temperature T_{Reference}.

If the temperature drops suddenly, the amount of water injected for NOX control can analogously be reduced until the temperature is back on the desired level.

While the short term temperature control is achieved by instantaneously varying the amount of water injected into the precalciner an additional adjustment to the amount of fuel added to the precalciner is to be initiated in parallel to make sure, the temperature can be maintained on the desired level once the variation of the water injection is through. The impact of varying the water injection will affect the temperature corresponding to the shape and length of the variations. The regular fuel input thus needs to adjust too to compensate the effect of the variation of water injection after it is through but it has now more time to let the regular fuel feeders to adjust.

The controller used for temperature and NOX control can be any electronic controller, such as PID, MPC, Fuzzy.

In a typical industrial plant, more than one NOₓ reducing solutions is available with different costs associated. An optimizer can take care of a cost efficient variation of the water injection.

### List of used Abbreviations and Reference Symbols

- 1: Rotary kiln
- 2: Precalciner
- 3: Suspension preheater
- 4: Exhaust gas
- 5: Raw meal feed
- Temp.: Temperature
- T_{Reference}: Temperature reference
- T_{Disturbed}: Temperature variation caused by external disturbance
- T_{H₂0-controlled}: Temperature progression of controlled by water injection
- H₂O [NO_{X}]: Amount of water injected to control NO_{X} level
- H₂O [Temp.]: Variation of water injected for short-term temperature control
- t₁: Time period of increase amount of water injected
- t₂: Time period of reduced amount of water injected
- Δ±H₂O: Short term variation of amount of water injected

## Claims

1. A method for controlling the temperature in a precalciner of a kiln plant which plant has the precalciner for decarbonizing raw material and the kiln for sintering clinker, comprising the steps of
- performing a temperature measurement that detects a deviation of the temperature in the precalciner from a reference temperature,
- determining an amount of water to be injected into the precalciner based on the deviation of the measured temperature and the reference temperature and
- injecting said amount of water into the precalciner to adjust the temperature in the precalciner.

2. A method according claim 1, **characterized by** the steps of:
- determining an average amount of water H₂O[NO_{X}] to be injected into the precalciner based on a level of nitrogen gas measurement that detects a deviation of the NO_{X} concentration from a reference NO_{X} value,
- injecting said determined average amount of water H₂O [NO_{X}] into the precalciner,
- determining an adjustment Δ+H₂O to the amount of water to be injected temporarily into the precalciner based on the temperature measurement that detects the deviation of the temperature in the precalciner from the reference temperature, and
- temporarily injecting said adjusted amount of water into the precalciner.

3. A method according to claim 2, **characterized in, that**
- a compensational amount of water Δ-H₂O is determined to compensate for the adjustment to the amount of water injected temporarily for temperature control purposes, and that
- said average amount of water H₂O [NO_{X}] injected for NOX control is temporarily readjusted by said compensational amount of water Δ-H₂O.

4. A method according to claim 3, **characterized in, that**
- the compensational amount of water Δ-H₂O is equal to said adjustment amount of water Δ+H₂O.

5. A method according to any of claims 2 to 4, **characterized in, that**
- the average amount of water injected for NO_{X} control purposes is determined based on an average of NO_{X} measurements taken over a first period of time, and that
- the adjusted amount of water for temperature control purposes is injected for a second period of time, which is shorter than said first period of time.

## Patentansprüche

1. Verfahren zum Steuern der Temperatur in einem Vorcalcinierer einer Ofenanlage, wobei die Anlage den Vorcalcinierer zum Dekarbonisieren von Rohmaterial und den Ofen zum Sintern von Klinker aufweist, umfassend die folgenden Schritte:
- Durchführen einer Temperaturmessung, die eine Abweichung der Temperatur in dem Vorcalcinierer von einer Referenztemperatur detektiert,
- Bestimmen einer in den Vorcalcinierer zu injizierenden Wassermenge auf der Basis der Abweichung der gemessenen Temperatur und der Referenztemperatur und
- Injizieren der Wassermenge in den Vorcalcinierer, um die Temperatur in dem Vorcalcinierer einzustellen.

2. Verfahren nach Anspruch 1, **gekennzeichnet durch** die folgenden Schritte:
- Bestimmen einer in den Vorcalcinierer zu injizierenden mittleren Wassermenge [H₂O[NO_{X}]] auf der Basis einer Stickstoffgaskonzentrationsmessung, die eine Abweichung der NO_{X}-Konzentration von einem Referenz-NO_{X}-Wert detektiert,
- Injizieren der bestimmten mittleren Wassermenge [H₂O[NO_{X}]] in den Vorcalcinierer,
- Bestimmen einer Einstellung [Δ+H₂O] an der temporär in den Vorcalcinierer zu injizierenden Wassermenge auf der Basis der Temperaturmessung, die die Abweichung der Temperatur in dem Vorcalcinierer von der Referenztemperatur detektiert, und
- temporäres Injizieren der eingestellten Wassermenge in den Vorcalcinierer.

3. Verfahren nach Anspruch 2, **dadurch gekennzeichnet, daß**
- eine kompensatorische Wassermenge [Δ-H₂O] bestimmt wird, um die Einstellung an der temporär injizierten Wassermenge zu Temperatursteuerzwecken zu kompensieren, und daß
- die für die NOX-Kontrolle injizierte mittlere Wassermenge [H₂O[NO_{X}]] durch die kompensatorische Wassermenge [Δ-H₂O] temporär neu eingestellt wird.

4. Verfahren nach Anspruch 3, **dadurch gekennzeichnet, daß**
- die kompensatorische Wassermenge [Δ-H₂O] gleich der Einstellmenge an Wasser [Δ+H₂O] ist.

5. Verfahren nach einem der Ansprüche 2 bis 4,
**dadurch gekennzeichnet, daß**
- die zu NO_{X}-Kontrollzwecken injizierte mittlere Wassermenge auf der Basis eines Mittelwerts von über eine erste Zeitperiode genommenen NO_{X}-Messungen bestimmt wird und daß
- die eingestellte Wassermenge zu Temperatursteuerzwecken für eine zweite Zeitperiode injiziert wird, die kürzer ist als die erste Zeitperiode.

## Revendications

1. Procédé de régulation de température dans un précalcinateur d'installation à four, ladite installation étant dotée du précalcinateur afin de décarburer de la matière première et du four afin d'agglomérer le clinker, comportant les étapes consistant à :
- effectuer une mesure de température qui détecte un écart de la température dans le précalcinateur par rapport à une température de référence,
- déterminer une quantité d'eau à injecter dans le précalcinateur sur la base de l'écart de la température mesurée et de la température de référence et
- injecter ladite quantité d'eau dans le précalcinateur afin d'ajuster la température du précalcinateur.

2. Procédé selon la revendication 1, **caractérisé par** les étapes consistant à :
- déterminer une quantité moyenne d'eau H₂O [NO_{X}] à injecter dans le précalcinateur sur la base d'un niveau de mesure d'azote gazeux qui détecte un écart de la concentration en NO_{X} par rapport à une valeur de référence du NO_{X},
- injecter ladite quantité moyenne d'eau H₂O [NO_{X}] dans le précalcinateur,
- déterminer un ajustement Δ+H₂O de la quantité d'eau à injecter temporairement dans le précalcinateur sur la base de la mesure de température qui détecte l'écart de la température dans le précalcinateur par rapport à la température de référence et
- injecter temporairement ladite quantité d'eau ajustée dans le précalcinateur.

3. Procédé selon la revendication 2, **caractérisé :**
- **en ce qu'**une quantité compensatoire d'eau Δ-H₂O est déterminée afin de compenser l'ajustement de la quantité d'eau injectée temporairement à des fins de régulation de température, et
- **en ce que** ladite quantité moyenne d'eau H₂O [NO_{X}] injectée pour la régulation du NO_{X} est temporairement réajustée par ladite quantité compensatoire d'eau Δ-H₂O.

4. Procédé selon la revendication 3, **caractérisé en ce que** :
- la quantité compensatoire d'eau Δ-H₂O est égale à ladite quantité d'eau d'ajustement Δ+H₂O.

5. Procédé selon l'une quelconque des revendications 2 à 4, **caractérisé :**
- **en ce que** la quantité moyenne injectée à des fins de régulation du NOₓ est déterminée sur la base d'une moyenne de mesures de NOₓ prises au cours d'une première période, et
- **en ce que** la quantité ajustée d'eau injectée à des fins de régulation de température est injectée au cours d'une deuxième période, qui est plus courte que ladite première période.
